# EUROPEAN PATENT APPLICATION

(11) **EP 4 618 179 A1**
(43) Date of publication of application: **17.09.2025**
(21) Application number: 24767353.6
(22) Date of filing: 29.02.2024
(51) Int. Cl.: H01M 4/133, H01M 4/36, H01M 4/583, H01M 4/38, H01M 10/052, H01M 4/02

(54) **ANODE AND LITHIUM ION SECONDARY BATTERY COMPRISING ANODE**

(30) Priority: 03.03.2023 KR 20230028510
(71) Applicant: LG Energy Solution, Ltd., Seoul 07335 (KR)
(72) Inventor: JUNG, Yi Jin, Daejeon 34122 (KR)
(74) Representative: Goddar, Heinz J.
(86) International application number: PCT/KR2024/002667
(87) International publication number: WO 2024/186064

(57) **Abstract**

The present invention provides a negative electrode comprising a current collector and an active material layer, wherein the active material layer comprises carbon material particles and at least one metal fluoride particles selected from the group consisting of AgF, LiF, ZnF₂, AlF₃, CaF₂, CoF₃, CuF₂, NiF₂, and CoF₂, and a lithium-ion secondary battery comprising the same.

## Description

### [Technical Field]

The present application claims the benefit and priority to Korean Patent Application No. 10-2023-0028510, filed March 3, 2023, and Korean Patent Application No. 10-2024-0029527, filed February 29, 2024, the disclosure of which is incorporated herein by reference in its entirety.

The present invention relates to a negative electrode and a lithium-ion secondary battery comprising the negative electrode.

### [Related Art]

Recently, all-solid-state secondary batteries utilizing solid electrolytes as electrolytes have drawn attention. To improve the energy density of these all-solid-state secondary batteries, the use of lithium as a negative electrode active material has been proposed. The capacity density (capacity per unit weight) of lithium is about 10 times that of graphite, which is commonly used as a negative electrode active material. Therefore, by using lithium as a negative electrode active material, it is possible to increase the power output while thinning the all-solid-state secondary battery.

As an all-solid-state lithium-ion secondary battery, for example, an anodeless lithium-ion secondary battery comprising a negative electrode active material layer comprising a metal forming an alloy with lithium and a carbon material is known.

The anodeless lithium-ion secondary battery as described above is driven by a mechanism in which metallic lithium precipitates from the negative electrode active material layer and between the negative electrode active material layer and the current collector when charging, and ionizes and migrates toward the positive electrode when discharging.

The negative electrode active material layer consists of carbon materials and metal materials such as Ag, and various materials are required to improve the drive characteristics and lifetime characteristics of the battery.

### [Prior Art Reference]

### [Patent Reference].

### Korean Laid-open Patent Application No. 10-2015-0064697

### [Detailed Description of the Invention]

### [Technical Problem]

The present invention aims to provide a negative electrode and a lithium-ion secondary battery comprising the negative electrode that can improve the drive characteristics and lifetime characteristics of the battery.

### [Technical solution]

To accomplish the above objective, the present invention provides:
a negative electrode comprising a current collector and an active material layer,
wherein the active material layer comprises carbon material particles and at least one metal fluoride particles selected from the group consisting of AgF, LiF, ZnF₂, AlF₃, CaF₂, CoF₃, CuF₂, NiF₂ and CoF₂.

The present invention also provides:
a lithium-ion secondary battery comprising a negative electrode; a positive electrode; and an electrolyte disposed between the negative electrode and positive electrode.

### [Advantageous Effects]

The negative electrode of the present invention includes a negative electrode active material layer in the form of a mixture of carbon material particles and metal fluoride particles, which provides an effect of improving the drive characteristics and lifetime characteristics of the battery.

Furthermore, by including the negative electrode active material layer, the lithium-ion secondary battery of the present invention provides excellent drive characteristics and lifetime characteristics.

### [Brief Description of Drawing]

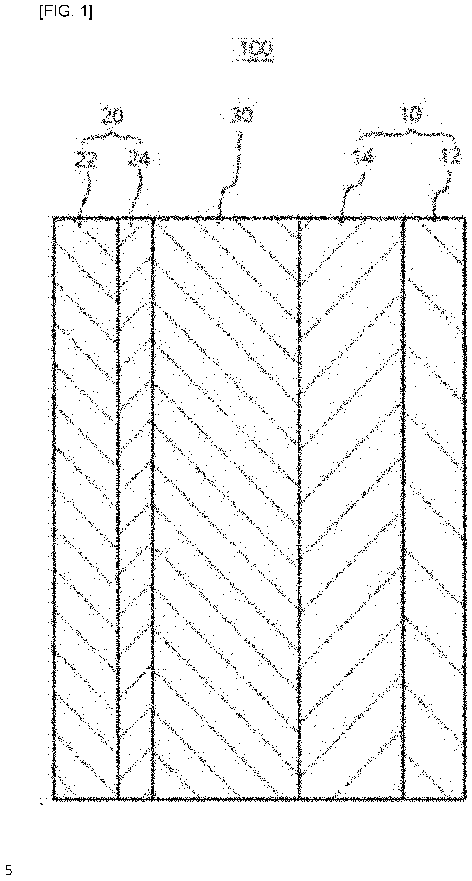

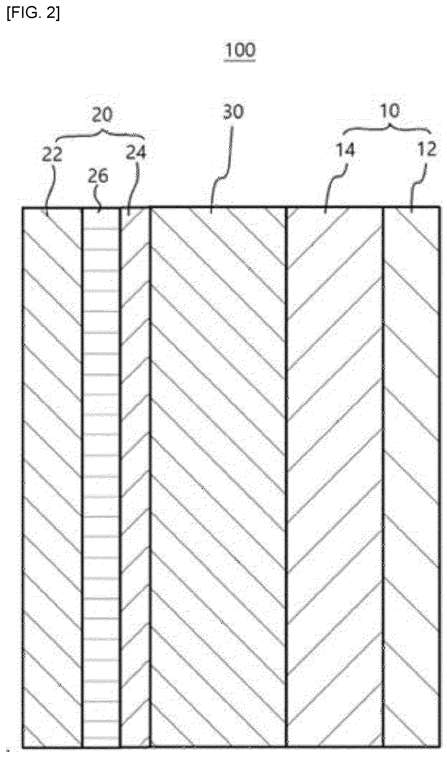

FIGs. 1 and 2 are schematic cross-sectional views of the structure of the lithium-ion secondary battery of the present invention.

### [Best Mode for Practicing the Invention]

Hereinafter, the present invention is described in more detail to provide a better understanding of the present invention.

The terms and words used in this specification and claims are not to be construed in their ordinary or dictionary sense, but rather in a sense and concept consistent with the technical idea of the present invention, based on the principle that the inventor(s) may properly define the concept of a term to best describe his/her invention. Further, the terms used in this specification are used to describe exemplary embodiments only and are not intended to limit the present invention. The singular expression includes the plural expression unless the context clearly indicates otherwise.

When a component is referred to as being "connected to, provided with, or installed on" another component, it should be understood that it may be directly connected to or installed on that component, but there may be other components therebetween. On the other hand, when a component is referred to as being "directly connected to or installed on" another component, it should be understood that there is no other component therebetween. Other expressions that describe relationships between components, such as "on top of" and "directly on top of", "between" and "directly between", or "adjacent to" and "directly adjacent to", should be interpreted similarly.

As used herein, the term "combination" includes mixtures, alloys, and reaction products, unless otherwise noted.

The negative electrode of the present invention includes a current collector and an active material layer,
wherein the active material layer comprises carbon material particles and one or more metal fluoride particles selected from the group consisting of AgF, LiF, ZnF₂, AlF₃, CaF₂, CoF₃, CuF₂, NiF₂ and CoF₂.

In one embodiment of the present invention, the metal fluoride particles may be comprised in an amount of 15 to 50 parts by weight, preferably 15 to 40 parts by weight, more preferably 20 to 30 parts by weight, and still more preferably 23 to 27 parts by weight, based on 100 parts by weight of the combined weight of the carbon material particles and the metal fluoride particles.

In the above, if the metal fluoride is comprised in an amount of less than 15 parts by weight, it is not sufficient to form an alloy with the lithium and therefore the benefit of lowering the alloying activation energy by the addition of the metal fluoride cannot be realized, and if it exceeds 50 parts by weight, it is undesirable because it reduces the storage capacity of the lithium, resulting in overall capacity degradation and reduced high rate discharge characteristics.

In one embodiment of the present invention, the ratio of the carbon material particle diameter (D50) to the metal fluoride particle diameter (D50) may be 1 : 0.03 to 1.5, 1 : 0.1 to 0.7, or 1 : 0.2 to 0.7. If the ratio of the metal fluoride particle diameter exceeds 1.5, the dispersibility in the electrode slurry is impaired, resulting in reduced coating properties and problems with the uniformity of the electrode. In addition, if the ratio of the metal fluoride particle diameter is less than 0.03, the specific surface area of the carbon material particles and the metal fluoride particles is greatly increased, which is undesirable because the amount of binder and solvent used is greatly increased, resulting in problems with capacity degradation and increased resistance.

In one embodiment of the present invention, the carbon material particles and metal fluoride particles may be included in a randomized mixture.

In one embodiment of the present invention, the carbon material particles may be, for example, amorphous carbon material particles. Specific examples of the amorphous carbon materials include carbon black, such as acetylene black, furnace black, or Ketjen black, graphene, or combinations thereof. When the crystallinity of the carbon material particles is high, the insertion and removal of lithium becomes difficult, which causes the disadvantage of increasing the resistance of the cell.

If the amorphous carbon material particles comprise pores, the pores may have a size of 1 nm or less, preferably 0.5 nm or less. However, it may be more preferable that the amorphous carbon material particles do not contain pores. This is because, if the amorphous carbon material particles include pores, lithium may precipitate inside the pores, and such lithium may be deactivated, and the amount of deactivated lithium may increase with repeated charge and discharge.

The pore size of the amorphous carbon material particles can be measured, for example, by nitrogen adsorption experiments or by transmission electron microscopy.

In one embodiment of the present invention, the carbon material particles may be used having a particle diameter (D50) of 10 nm to 150 nm, preferably 20 nm to 100 nm.

In one embodiment of the present invention, the carbon material particles may be carbon material particles comprising 3 to 10 at% oxygen based on the total elements contained in the carbon material particles. If the oxygen is comprised in an amount of less than 3 at%, it is undesirable because the surface roughness of the active material layer is degraded, and if it is comprised in an amount of more than 10 at%, it is undesirable because the performance of the cell is degraded due to side reactions with the solid electrolyte.

In the above, the lower limit value of the oxygen content may be 3.5 at% or more, 4 at% or more, or 4.5 at% or more. Further, the upper limit value of the content may be 9.5 at% or less, 9 at% or less, 8 at% or less, 7.5 at% or less, 7 at% or less, 6.5 at% or less, 6 at% or less, or 5.5 at% or less. The oxygen content may be in a range including combinations of the lower and upper values. Specifically, the oxygen content may be more preferably between 5 and 10 at%.

In one embodiment of the present invention, the oxygen may be present in the form of being incorporated into a functional group that binds to the carbon material particles. Further, the functional group may comprise one or more selected from the group consisting of carboxylic groups, hydroxy groups, ether groups, ester groups, aldehyde groups, carbonyl groups, and amide groups.

The carbon material particles comprising 3 to 10 at% oxygen can be prepared, for example, by oxidizing the carbon material. Specifically, oxygen-containing functional groups can be introduced to the surface of the carbon material by treating the carbon material with an acid and reacting with stirring at a temperature of 25°C to 60°C. The type of acid is not particularly limited and can be any acid capable of introducing oxygen-containing functional groups to the surface of the carbon material. The acid may be, for example, sulfuric acid, nitric acid, or mixtures thereof, and an oxidizing agent such as potassium permanganate may also be used.

The carbon material comprising oxygen can be manufactured and used directly or purchased.

The content of oxygen in the carbon material can be measured using photoelectron spectroscopy (XPS or ESCA). For example, it can be measured using a K-Alpha (Thermo Fisher Scientific) device.

In one embodiment of the present invention, the oxygen may be present on the surface of the carbon material particles. The surface does not necessarily mean only the outer surface of the carbon material particles, but includes the surface of the pores, if any.

In one embodiment of the present invention, the metal fluoride particles having a particle diameter (D50) of 10 nm to 150 nm, preferably 20 nm to 100 nm, may be used.

In one embodiment of the present invention, the active material layer may comprise 60 to 80% by weight of carbon material particles, 15 to 30% by weight of metal fluoride particles, and 3 to 20% by weight of a binder. The binder may be, for example, a resin material such as styrene butadiene rubber (SBR), polytetrafluoroethylene, polyvinylidene fluoride, polyethylene, or the like. The binder may be comprised of at least one selected from such resin materials.

In one embodiment of the present invention, the carbon material particles and metal fluoride particles may be included in the form of a carbon material-metal fluoride composite.

In an anodeless battery, the negative electrode active material layer is formed as a micro-thin film, and it is very difficult to form conventional active material composites with a small particle size. In other words, if the particle size of the active material composite is too large for the micro-thin film, it is difficult to form a negative electrode active material layer with a good surface roughness, and this decrease in surface roughness causes a decrease in the driving characteristics of the battery.

The present invention provides a dramatic improvement over the above problems of the prior art. That is, the carbon material-metal fluoride composite of the present invention forms a carbon material-metal fluoride composite having a significantly smaller particle size compared to the case of using a conventional carbon material. The carbon material containing at least 3 at% oxygen forming the composite has the characteristic of mixing well with the metal fluoride particles, and being uniformly distributed with the metal fluoride particles. Thus, it is possible to produce a carbon material-metal fluoride composite having excellent component uniformity. Furthermore, for the above reasons, it is possible to produce a carbon material-metal fluoride composite having a small and uniform particle size.

In one embodiment of the present invention, the carbon material-metal fluoride composite may be formed by one or more bonds selected from chemical bonds of the carbon material particles and the metal fluoride particles, van der Waals bonds of the carbon material particles and the metal fluoride particles, and bonds by a binder of the carbon material particles and the metal fluoride particles. The chemical bond may be a bond between the metal fluoride particles and oxygen contained in the carbon material.

In one embodiment of the present invention, the carbon material-metal fluoride composite may comprise 60 to 80% by weight of carbon material, 15 to 30% by weight of metal fluoride, and 3 to 20% by weight of binder, based on total weight.

The binder may be used in the wet manufacture of the carbon material-metal fluoride composite by dissolving it in a solvent together with the carbon material particles and the metal fluoride particles, wherein the carbon material-metal fluoride composite may include the binder.

In one embodiment of the present invention, the particle size (D50) of the carbon material-metal fluoride composite may be 0.1 µm to 0.5 µm. The upper limit value of the particle size may be 0.4 µm or 0.3 µm.

Further, the maximum particle size of the carbon material-metal fluoride composite may be 3 µm or less, 2 µm or less, 1.5 µm or less, 1 µm or less.

It is very important to produce a small particle size of the carbon material-metal fluoride composite because if the particle size of the carbon material-metal fluoride composite is too large compared to the micro-thin film, it is difficult to form a negative electrode active material layer with a good surface roughness, and the driving characteristics of the battery are reduced.

The reason for the deterioration of the drive characteristics of the battery is that when the surface roughness of the negative electrode active material layer is large, there is not enough contact with the electrolyte layer in the electrolyte side, and it is not conducive to uniform precipitation of lithium in the negative electrode current collector side.

In an anodeless lithium-ion secondary battery, the thickness of the negative electrode active material layer can be formed in the range of 1 µm to 100 µm, or 10 µm to 60 µm in general, and can be formed in a thickness of 10 µm, 20 µm, 30 µm, 40 µm or 50 µm, in particular.

For example, it is obvious that if a carbon material-metal fluoride composite with a particle size of 10 µm is used to form a negative electrode active material layer with a thickness of 20 µm, it is difficult to achieve the desired surface roughness.

It is preferable if the maximum particle size of the carbon material-metal fluoride composite is 3 µm or less, as the surface roughness improvement effect can be obtained more reliably. On the other hand, if it exceeds 3 µm, it may be difficult to obtain excellent surface roughness when forming a thin film.

The particle size of the carbon material-metal fluoride composite may be measured using a particle size analyzer. For example, it may be measured using a Mastersizer 3000 (Malvem panalytical) instrument.

The present invention provides a negative electrode active material layer comprising the carbon material-metal fluoride composite.

The negative electrode active material layer has a uniform distribution of carbon materials and metal fluorides, and has an excellent surface roughness, which improves the driving characteristics of the lithium-ion secondary battery comprising it.

The present invention also provides:
a lithium-ion secondary battery comprising a negative electrode; a positive electrode; and an electrolyte disposed between the negative electrode and the positive electrode.

The lithium-ion secondary battery may be an anodeless battery.

By including the negative electrode active material layer of the present invention, the lithium-ion secondary battery provides improved drive characteristics and lifetime characteristics.

In one embodiment of the present invention, the solid electrolyte may be a sulfide-based solid electrolyte.

In one embodiment of the present invention, the lithium-ion secondary battery may be an anodeless battery.

Embodiments of the present invention are described in more detail below.

### <Composition of an all-solid-state lithium-ion secondary battery>

FIG. 1 is a cross-sectional view illustrating a schematic configuration of an all-solid-state lithium-ion secondary battery according to one embodiment of the present invention.

The all-solid-state lithium-ion secondary battery (100) according to one embodiment of the present invention is a so-called lithium-ion secondary battery, which is charged and discharged by the movement of lithium ions between the positive electrode (10) and the negative electrode (20). Specifically, the all-solid-state lithium-ion secondary battery (100) comprises, as shown in FIG. 1, a positive electrode (10), a negative electrode (20), and a solid electrolyte layer (30) disposed between the positive electrode (10) and the negative electrode (20).

### (1) Positive electrode

As shown in FIG. 1, the positive electrode (10) includes a positive electrode current collector (12) and a positive electrode active material layer (14) disposed in turn toward the negative electrode (20).

The positive electrode current collector (12) may be a plate or foil. The positive electrode current collector (12) may be one metal or an alloy of two or more metals selected from, for example, indium, copper, magnesium, stainless steel, titanium, iron, cobalt, nickel, zinc, aluminum, germanium, and lithium.

The positive electrode active material layer (14) can reversibly adsorb and release lithium ions. The positive electrode active material layer (14) may include a positive electrode active material and a solid electrolyte.

The positive electrode active material may be a compound in which lithium can be inserted/removed. Examples of compounds in which lithium can be inserted or removed may be represented by any one of LiₐA_{1-b}B'_{b}D'₂ (wherein 0.90≤a≤1.8, and 0≤b≤0.5); LiₐE_{1-b}B'_{b}O_{2-c}D'_{c} (wherein 0.90≤a≤1.8, 0≤b≤0.5, and 0≤c≤0.05); LiE_{2-b}B'_{b}O_{4-c}D'_{c} (wherein 0≤b≤0.5, and 0≤c≤0.05); LiₐNi_{1-b-c}Co_{b}B'_{c}D'_{α} (wherein 0.90≤a≤1.8, 0≤b≤0.5, 0≤c≤0.05, and 0<a≤2); LiₐNi_{1-b-c}Co_{b}B'_{c}O_{2-α}F'_{α} (wherein 0.90≤a≤1.8, 0≤b≤0.5, 0≤c≤0.05, and 0<α< 2); LiₐNi_{1-b-c}Mn_{b}B'_{c}D'_{α} (wherein 0.90≤a≤1.8, 0≤b≤0.5, 0≤c≤0.05, and 0<α≤2); LiₐNi_{1-b-c}Mn_{b}B'_{c}O_{2-α}F'_{α} (wherein 0.90≤a≤1.8, 0≤b≤0.5, 0≤c≤0.05, and 0<α<2); LiₐNi_{b}E_{c}G_{d}O₂ (wherein 0.90≤a≤1.8, 0≤b≤0.9, 0≤c≤0.5, and 0.001≤d≤ 0.1); LiₐNi_{b}Co_{c}Mn_{d}GₑO₂ (wherein 0.90≤a≤1.8, 0≤b≤0.9, 0≤c≤0.5, 0≤d≤0.5, and 0.001≤e≤0.1); LiₐNiG_{b}O₂ (wherein 0.90≤a≤1.8, and 0.001≤b≤0.1); LiₐCoG_{b}O₂ (wherein 0.90≤a≤1.8, and 0.001≤b≤0.1); LiₐMnG_{b}O₂ (wherein 0.90≤a≤1.8, and 0.001≤b≤0.1); LiₐMn₂G_{b}O₄ (wherein 0.90≤a≤1.8, and 0.001≤b≤0.1); QO₂; QS₂; LiQS₂; V₂O₅; LiV₂O₅; LiI'O₂; LiNiVO₄; Li_{(3-f)}J₂(PO₄)₃(0≤f≤2); Li_{(3-f)}Fe2(PO₄)₃(0≤f≤2); and LiFePO₄.

In the above formulae, A is Ni, Co, Mn, or a combination thereof; B' is Al, Ni, Co, Mn, Cr, Fe, Mg, Sr, V, a rare earth element, or a combination thereof; D' is O, F, S, P, or a combination thereof; E is Co, Mn, or a combination thereof; F' is F, S, P, or any combination thereof; G is Al, Cr, Mn, Fe, Mg, La, Ce, Sr, V, or any combination thereof; Q is Ti, Mo, Mn, or any combination thereof; I' is Cr, V, Fe, Sc, Y, or any combination thereof; J is V, Cr, Mn, Co, Ni, Cu, or any combination thereof.

Specific examples of such positive electrode active materials include lithium cobaltate (hereinafter referred to as LCO), lithium nickelate, lithium nickel cobaltate, lithium nickel cobalt aluminumate (hereinafter referred to as NCA), lithium nickel cobalt manganate (hereinafter referred to as NCM), lithium salts such as lithium manganate and lithium iron phosphate, and lithium sulfide. The positive electrode active material layer (14) may comprise only one or two or more selected from these compounds as the positive electrode active material.

The positive electrode active material may comprise a lithium salt of a transition metal oxide having a layered rock salt structure among the lithium salts described above. Here, "layered rock salt structure" means a structure in which layers of oxygen atoms and layers of metal atoms are arranged alternately and regularly in the direction of a cubic rock salt structure, resulting in each layer of atoms forming a two-dimensional plane. "Cubic rock salt structure" also means a sodium chloride-type structure, which is one of the crystal structures. For example, "cubic rock salt structure" refers to a structure in which the face-centered cubic lattices formed by cations and anions are arranged in such a way that they are offset from each other by 1/2 of the corners of the unit lattice.

The lithium salt of the transition metal oxide having such a layered rock salt structure may be a ternary lithium transition metal oxide, such as, for example, LiNiₓCo_{y}Al_{z}O₂(NCA) or LiNiₓCo_{y}Mn_{z}O₂(NCM) (wherein 0 < x < 1, 0 < y < 1, 0 < z < 1, and x + y + z = 1). The positive electrode active material layer (14) may include a lithium salt of a ternary transition metal oxide having such a layered rock salt structure as the positive electrode active material to improve the energy density and thermal stability of the all-solid-state lithium-ion secondary battery (100).

Here, the shape of the positive electrode active material may be, for example, a particle shape such as a spherical, ellipsoidal, or spherical form. Furthermore, the particle diameter of the positive electrode active material is not particularly limited and can be in the range applicable to the positive electrode active material of a conventional all-solid-state lithium-ion secondary battery. Furthermore, the content of the positive electrode active material in the positive electrode active material layer (14) is not particularly limited and can be within the range applicable to the positive electrode of a conventional all-solid-state lithium-ion secondary battery.

Of course, it is also possible to use a compound having a coating layer on the surface thereof, or to use a mixture of the compound and a compound having a coating layer. This coating layer may comprise a coating element compound such as an oxide of a coating element, a hydroxide, an oxyhydroxide of a coating element, an oxycarbonate of a coating element, or a hydroxycarbonate of a coating element. The compound constituting a coating layer may be amorphous or crystalline. The coating elements included in the coating layer may include Mg, Al, Co, K, Na, Ca, Si, Ti, V, Sn, Ge, Ga, B, As, Zr, or mixtures thereof. The process of forming the coating layer can be carried out by any coating method (e.g., spray coating or immersion method) provided that the compound can be coated with these elements in a way that does not adversely affect the properties of the positive electrode active material, which is well understood by those skilled in the art and will not be described in detail.

Specific examples of the above coating layer include Li₂O-ZrO₂.

The solid electrolyte included in the positive electrode active material layer (14) may be the same as or different from the solid electrolyte included in the solid electrolyte layer (30) described later.

In addition to the positive electrode active material and solid electrolyte described above, the positive electrode active material layer (14) may also be a suitable combination of additives such as, for example, conductive agents, binders, fillers, dispersants, or ionic conductivity aids.

The conductive agent may be, for example, graphite, carbon black, acetylene black, Ketjen black, carbon fiber, or metal powder. The binder may comprise, for example, styrene butadiene rubber (SBR), polytetrafluoroethylene, polyvinylidene fluoride, or polyethylene. In addition, any of the materials commonly used in electrodes of all-solid-state lithium-ion secondary batteries can be used as fillers, dispersants, or ionic conductivity aids.

### (2) Negative electrode

The negative electrode (20) may include a negative electrode current collector (22) and a negative electrode active material layer (24) disposed one after the other toward the positive electrode (10).

The negative electrode current collector (22) may be a plate or foil. The negative electrode current collector (22) may comprise a material that does not react with lithium, in other words, does not form any of the alloys and compounds with lithium. Materials constituting the negative electrode current collector (22) may include, for example, copper, stainless steel, titanium, iron, cobalt, and nickel. The negative electrode current collector (22) may be composed of one of these metals, or may be composed of an alloy or clad material of two or more metals.

The negative electrode active material layer (24) may not contain lithium in the negative electrode current collector (22), in the negative electrode active material layer (24), or between the negative electrode active material layer (24) and the solid electrolyte layer (30) in an initial state or in a fully discharged state. As described later, when the all-solid-state lithium-ion secondary battery (100) according to one embodiment is overcharged, the active material contained in the negative electrode active material layer (24) and the lithium ions that have migrated from the positive electrode (10) may form an alloy or compound and a metal layer (26) having lithium as a major component may be formed (precipitated) on the negative electrode (20) as shown in FIG. 2. The metal layer (26) may be precipitated and disposed between the negative electrode current collector (22) and the negative electrode active material layer (24), inside the negative electrode active material layer (24), or both. Between the negative electrode current collector (22) and the negative electrode active material layer (24), the lithium-based metal layer (26) may be disposed closer to the negative electrode current collector (22) than to the negative electrode active material layer (24).

The negative electrode active material layer (24) may comprise carbon material particles, metal fluoride particles and a binder. By including the binder, the negative electrode active material layer (24) can be stabilized on the negative electrode current collector (22). The material constituting the binder may be, for example, a resin material such as styrene butadiene rubber (SBR), polytetrafluoroethylene, polyvinylidene fluoride, or polyethylene. The binder may comprise one or more selected from these resin materials.

The negative electrode active material layer (24) may also be suitably formulated with additives used in conventional all-solid-state lithium-ion secondary batteries, such as fillers, dispersants, or ion conductors. Specific examples of such additives are the same as those described above for the positive electrode.

The overall thickness of the negative electrode active material layer (24) is not particularly limited, but may be 1 µm to 100 µm, or 10 µm to 60 µm. If the thickness of the negative electrode active material layer (24) is less than 1 µm, the performance of the all-solid-state secondary battery may not be sufficiently improved. If the thickness of the negative electrode active material layer (24) exceeds 100 µm, the resistance of the negative electrode active material layer (24) may be high, and consequently, the performance of the all-solid-state secondary battery may not be sufficiently improved. By using the binder described above, the thickness of the negative electrode active material layer (24) can be easily secured at an appropriate level.

Meanwhile, the negative electrode current collector (22) may further comprise a film comprising a material capable of forming an alloy or compound with lithium, wherein the film is disposed between the negative electrode current collector (22) and the negative electrode active material layer (24).

The negative electrode current collector (22) does not react with lithium metal, but may make it difficult to precipitate a smooth layer of lithium metal on top. The film may also be used as a wetting layer to allow lithium metal to precipitate smoothly on top of the negative electrode current collector (22).

Materials capable of forming an alloy with the lithium metal used in the film may include silicon, magnesium, aluminum, lead, silver, tin, or combinations thereof. Materials capable of forming compounds with the lithium metal used in the film may include carbon, titanium sulfide, iron sulfide, or combinations thereof. The content of the material used in the film may be in small amounts without affecting the electrochemical properties of the electrode and/or the redox potential of the electrode. The film may be applied flatly on the negative electrode current collector (22) to prevent cracking during the charging cycle of the all-solid-state lithium-ion secondary battery (100). The application of the film may be by physical deposition, such as evaporation or sputtering, chemical deposition, or plating.

The thickness of the film may be 1 nm to 500 nm. The thickness of the film may be, for example, 2 nm to 400 nm. The thickness of the film may be, for example, 3 nm to 300 nm. The thickness of the film may be, for example, 4 nm to 200 nm. The thickness of the film may be, for example, 5 nm to 100 nm.

### (3) Solid electrolyte layer

The solid electrolyte layer (30) is disposed between the positive electrode (10) and the negative electrode (20) (e.g., between the positive electrode active material layer (14) and the negative electrode active material layer (24)). The solid electrolyte layer (30) comprises a solid electrolyte capable of migrating ions. The solid electrolyte layer (30) may include a sulfide-based solid electrolyte.

The above sulfide-based solid electrolyte may include Li₂S-P₂S₅, Li₂S-P₂S₅-LiX (wherein X is a halogen atom), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCI, Li₂S-SiS₂-B₂S₃-LiI, Li₂S-SiS₂-P₂S₅-LiI, Li₂S-B₂S₃, Li₂S-P₂S_{S}-ZₘSₙ (wherein m and n are positive numbers, Z is any one of Ge, Zn and Ga), Li₂S-GeS₂, Li₂S-SiS₂-Li₃PO₄, Li₂S-SiS₂-LiₚMO_{q} (wherein p and q are positive numbers, M is any one of P, Si, Ge, B, Al, Ga and In), and combinations thereof. The solid electrolyte may comprise one or two or more materials selected from these sulfide-based solid electrolyte materials.

The sulfide-based solid electrolyte may include a solid electrolyte represented by Formula 1 below:

<Formula 1> LiₓM'_{y}PS_{z}Aw,

wherein x, y, z, w are independently 0 or more and 6 or less;
M' is at least one of As, Ge, Ga, Sb, Si, Sn, Al, In, Ti, V, Nb and Ta;
A is at least one of F, Cl, Br and I.

As a solid electrolyte, the sulfide solid electrolyte material may comprise sulfur (S), phosphorus (P), and lithium (Li) as a component. For example, a composition comprising Li₂S-P₂S₅ can be utilized. When utilizing a sulfide-based solid electrolyte material comprising Li₂S-P₂S₅, the mixed molar ratio of Li₂S to P₂S₅ may be selected in the range of, for example, Li₂S:P₂S₅ of 50:50 to 90:10.

Solid electrolyte can also be amorphous or crystalline. They can also be a mixture of amorphous and crystalline.

The solid electrolyte layer (30) may further comprise a binder. The binder material may be, for example, a resin such as styrene butadiene rubber (SBR), polytetrafluoroethylene, polyvinylidene fluoride, polyethylene, or polyacrylic acid. The binder material may be the same as the material constituting the binder in the positive electrode active material layer (14) and the negative electrode active material layer (24), or it may be different therefrom.

### (4) Composition of an all-solid-state lithium-ion secondary battery

The all-solid-state lithium-ion secondary battery (100) of the present invention may be an all-solid-state lithium-ion secondary battery (100) comprising a positive electrode (10), a solid electrolyte layer (30), and a negative electrode (20), in that order, as shown in FIG. 1.

### <Method for manufacturing all-solid-state lithium-ion secondary battery>

Next, a manufacturing method of the all-solid-state lithium-ion secondary battery (100) will be described. The all-solid-state lithium-ion secondary battery (100) according to one embodiment can be obtained by fabricating the positive electrode (10), the negative electrode (20), and the solid electrolyte layer (30), respectively, and then laminating each of the above layers.

### (1) Positive electrode manufacturing process

The positive electrode manufacturing process is described as follows as an example. First, the materials constituting the positive electrode active material layer (14) (i.e., positive electrode active material, binder, etc.) are added to a non-polar solvent to form a slurry (or paste). The slurry is then applied to the prepared positive electrode current collector (12). This is dried to obtain a laminate. The laminate is then pressurized, for example, using hydrostatic pressure, to obtain the positive electrode (10). In this case, the pressurization process is omitted.

### (2) Negative electrode manufacturing process

The negative electrode manufacturing process is described by way of example as follows. First, a slurry (a paste is also preferable) is prepared by adding the materials comprising the negative electrode active material layer (24) (i.e., carbon material particles, metal fluoride particles, binders, etc.) to a polar solvent or a non-polar solvent. The obtained slurry is then applied to the prepared negative electrode current collector (22) to form a negative electrode active material layer.

If the negative electrode active material layer further comprises one or more layers, the additional layers may be stacked in the same manner as above.

The laminate obtained by the above method is then pressurized, for example, by hydrostatic pressure, to produce the negative electrode (20). The method of applying the slurry to the negative electrode current collector (22) is not particularly limited, and can be, for example, screen printing, metal mask printing, electrostatic painting, dip coating, spray coating, roll coating, doctor blading, or gravure coating.

The method of forming a negative electrode active material layer in two layers was described above, but even in the case of forming additional layers, the negative electrode can be produced by preparing a slurry to form each layer and sequentially stacking each layer according to the stacking sequence using the method described above.

### (3) Solid electrolyte layer manufacturing process

The solid electrolyte layer (30) can be manufactured by a solid electrolyte comprising, for example, a sulfide-based solid electrolyte material.

First, starting materials (e.g., Li2S or P2S5) are processed by a melt quenching method or a mechanical milling method to obtain a sulfide-based solid electrolyte material. For example, when the melt quenching method is used, the starting materials are mixed in a predetermined amount, pelletized, reacted at a predetermined reaction temperature in a vacuum, and quenched to produce a sulfide-based solid electrolyte material. Furthermore, the reaction temperature of the mixture of Li₂S and P₂S₅ may be 400°C to 1000°C, such as 800°C to 900°C. Further, the reaction time may be 0.1 hour to 12 hours, such as 1 hour to 12 hours. Further, the quenching temperature of the reaction may be 10°C or less, such as 0°C or less, and the quenching rate may be typically 1 °C/sec to 10000°C/sec, such as 1 °C/sec to 1000°C/sec.

In addition, when a mechanical milling method is used, the sulfide-based solid electrolyte material can be produced by stirring and reacting the starting material using a ball mill. In addition, the stirring speed and stirring time of the mechanical milling method are not particularly limited, but the faster the stirring speed, the faster the sulfide-based solid electrolyte material can be produced, and the longer the stirring time, the higher the conversion rate of the raw materials into the sulfide-based solid electrolyte material.

The obtained mixed raw material (sulfide-based solid electrolyte material) is then heat treated at a predetermined temperature, and the solid electrolyte can be ground to produce a particle-shaped solid electrolyte. If the solid electrolyte has a glass transition point, it may change from amorphous to crystalline by heat treatment.

The solid electrolyte obtained by the above method can then be screened using a known screening method, for example, an aerosol positioning method, a cold spray method, or a sputtering method, to prepare the solid electrolyte layer (30). The solid electrolyte layer (30) may also be prepared by pressurizing solid electrolyte particles. The solid electrolyte layer (30) can also be prepared by mixing solid electrolyte with a solvent and a binder, and applying drying and pressurizing the solid electrolyte layer (30).

### (4) Laminating Process

An all-solid-state lithium-ion secondary battery (100) according to one embodiment can be obtained by disposing a solid electrolyte layer (30) between the positive electrode (10) and the negative electrode (20) and pressurizing it, for example, using hydrostatic pressure.

The all-solid-state lithium-ion secondary battery (100) of the present invention does not require high external pressure to be applied using an end plate, and can provide improved discharge capacity even if the external pressure applied to the positive electrode (10), the negative electrode (20), and the solid electrolyte layer (30) is 1 MPa or less when used.

### <Method for charging an all-solid-state lithium-ion secondary battery>

Next, a method for charging an all-solid-state lithium-ion secondary battery (100) is described.

A method of charging an all-solid-state lithium-ion secondary battery (100), according to one embodiment, may be to charge (i.e., overcharge) an all-solid-state lithium-ion secondary battery (100) beyond the charging capacity of the negative electrode active material layer (24).

At the beginning of charging, lithium may be adsorbed within the negative electrode active material layer (24). Upon charging beyond the charging capacity of the negative electrode active material layer (24), lithium may precipitate from the back side of the negative electrode active material layer (24), i.e., between the negative electrode current collector (22) and the negative electrode active material layer (24), and the lithium may form a metal layer (26) that was not present at the time of manufacture, as shown in FIG. 2. During discharge, the lithium in the negative electrode active material layer (24) and the metal layer (26) can be ionized and migrate to the positive electrode (10) side. Therefore, in the all-solid-state lithium-ion secondary battery (100) of the present invention, lithium can be used as the negative electrode active material. Furthermore, since the negative electrode active material layer (24) coats the metal layer (26), it can function as a protective layer for the metal layer (26) and at the same time inhibit the precipitation and growth of dendritic metallic lithium. In this way, short circuits and capacity degradation of the all-solid-state lithium-ion secondary battery (100) may be inhibited, and furthermore, the characteristics of the all-solid-state lithium-ion secondary battery (100) may be improved. Furthermore, according to one embodiment, the metal layer (26) is not pre-formed, which may reduce the manufacturing cost of the all-solid-state lithium-ion secondary battery (100).

The metal layer (26) may also be formed on the interior of the negative electrode active material layer (24), rather than being limited to being formed between the negative electrode current collector (22) and the negative electrode active material layer (24) as shown in FIG. 2. Further, the metal layer (26) may be formed both between the negative electrode current collector (22) and the negative electrode active material layer (24) and on the interior of the negative electrode active material layer (24).

The all-solid-state lithium-ion secondary battery (100) of the present invention may be fabricated as a unit cell with a structure of positive electrode/separator/negative electrode, a bicell with a structure of positive electrode/separator/negative electrode/separator/positive electrode, or a stacked cell in which the structure of the unit cell is repeated.

The shape of the all-solid-state lithium-ion secondary battery (100) of the present invention is not particularly limited, and can be, for example, coin-shaped, button-shaped, sheet-shaped, stacked, cylindrical, flat, or horn-shaped. It can also be applied to large batteries used in electric vehicles. For example, an all-solid-state lithium-ion secondary battery (100) may be used in a hybrid vehicle such as a plug-in hybrid electric vehicle (PHEV). They can also be used in applications that require large amounts of power storage. For example, it can be used in electric bicycles or power tools.

### [Mode for Practicing the Invention]

Hereinafter, examples are provided in order to illustrate the present invention in detail. However, examples according to the present invention may be modified in many other ways, and the scope of the present invention should not be construed to be limited to the examples described below. The examples of the present invention are provided to more fully illustrate the present invention to one of ordinary skill in the art.

### Manufacturing Example 1: Selecting a carbon material sample with oxygen-containing functional groups introduced

Various types of carbon materials available in the market were purchased and the oxygen content of each carbon material was analyzed as follows, selecting carbon black with 5.2 at% oxygen (Sample 1), carbon black with 2.6 at% oxygen (Sample 2), and carbon black with 1.3 at% oxygen (Sample 3).

### <Analysis method>

### (1) Analyzers

Using K-Alpha (Thermo Fisher Scientific), an optoelectronic spectrometer (XPS or ESCA)

### (2) Analysis method

First, a survey scan spectrum and a narrow scan spectrum were obtained for each sample. The above narrow scan spectrum was measured by 4 points for each location and the average and deviation were obtained.

### (3) ESCA common experimental conditions

X-ray source: Monochromated Al Ka (1486.6 eV)
X-ray spot size: 400 µm
Operation mode: Constant Analyzer Energy (CAE) mode
Survey scan: pass energy 200 eV, energy step 1 eV
Narrow scan: scanned mode, pass energy 50 eV, energy step 0.1 eV
Charge compensation: flood gun off
SF: Al THERMO1, ECF: TPP-2M, BG subtraction: Smart

**[Table 1]**

| | Carbon black sample 1 | | Carbon black sample 2 | | Carbon black sample 3 | |
|---|---|---|---|---|---|---|
| Component | Average (at%) | Deviation | Average (at%) | Deviation | Average (at%) | Deviation |
| O | 5.2 | 0.1 | 2.6 | 0.2 | 1.3 | 0.2 |
| C | 94.5 | 0.1 | 97.2 | 0.2 | 98.3 | 0.2 |
| S | 0.3 | 0.04 | 0.3 | 0.03 | 0.4 | 0.04 |

### Example 1-1: Preparation of negative electrode active material slurry

6 g of carbon black (with an oxygen concentration of 5.2 at%) with a particle diameter (D50) of 41 nm, 2 g of AgF with a particle diameter (D50) of 10 nm to 20 nm, 9.33 g of PVdF binder (6% solids), and 6 g of NMP solution were placed in a Thinky mixer container and mixed 12 times at 1800 rpm for 3 minutes each. Then, an additional 6 g of NMP solution was added and mixed 5 times at 1800 rpm for 3 minutes each to prepare the negative electrode active material slurry of Example 1.

### Example 1-2: Preparation of negative electrode active material slurry

The negative electrode active material slurry was prepared in the same way as in Example 1 above, except that LiF of 10 nm to 20 nm was used instead of AgF.

### Example 1-3: Preparation of negative electrode active material slurry

The negative electrode active material slurry was prepared in the same way as in Example 1 above, except that ZnF₂ with a particle diameter (D50) of 10 nm to 20 nm was used instead of AgF.

### Example 1-4: Preparation of negative electrode active material slurry

The negative electrode active material slurry was prepared in the same manner as in Example 1 above, except that carbon black (containing an oxygen concentration of 2.6 at%) with a particle diameter (D50) of 50 nm was used instead of carbon black (containing an oxygen concentration of 5.2 at%), and ZnF₂ with a particle diameter (D50) of 10 nm to 20 nm was used instead of AgF.

### Example 1-5: Preparation of negative electrode active material slurry

The negative electrode active material slurry was prepared in the same manner as in Example 1 above, except that carbon black (containing an oxygen concentration of 1.3 at%) with a particle diameter (D50) of 40 nm was used instead of carbon black (containing an oxygen concentration of 5.2 at%), and ZnF₂ with a particle diameter (D50) of 10 nm to 20 nm was used instead of AgF.

### Example 1-6: Preparation of negative electrode active material slurry

6 g of carbon black (with an oxygen concentration of 5.2 at%) with a particle diameter (D50) of 41 nm, 1.1 g of AgF with a particle diameter (D50) of 10 nm to 20 nm, 9.33 g of PVdF binder (6% solids), and 6 g of NMP solution were placed in a Thinky mixer container and mixed 12 times at 1800 rpm for 3 minutes each. Then, an additional 6 g of NMP solution was added and mixed 5 times at 1800 rpm for 3 minutes each to prepare the negative electrode active material slurry of Example 1.

### Comparative Example 1-1: Preparation of negative electrode active material slurry

The negative electrode active material slurry of Comparative Example 1 was prepared in the same manner as in Example 1, except that 2 g of Ag with a particle diameter (D50) of 40 nm to 60 nm was used instead of 2 g of AgF.

### Comparative Example 1-2: Preparation of negative electrode active material slurry

6 g of carbon black with a particle diameter (D50) of 41 nm (with an oxygen concentration of 5.2 at%), 0.7 g of AgF with a particle diameter (D50) of 10 nm to 20 nm, 9.33 g of PVdF binder (6% solids), and 6 g of NMP solution were placed in a Thinky mixer container and mixed 12 times at 1800 rpm for 3 minutes each. Then, an additional 6 g of NMP solution was added and mixed 5 times at 1800 rpm for 3 minutes each to prepare the negative electrode active material slurry of Comparative Example 1.

### Comparative Example 1-3: Preparation of negative electrode active material slurry

The negative electrode active material slurry was prepared in the same manner as in Example 1 above, except that 2 g of MgF₂ with a particle diameter (D50) of 40 nm to 60 nm was used instead of 2 g of AgF.

### Comparative Example 1-4: Preparation of negative electrode active material slurry

The negative electrode active material slurry was prepared in the same manner as in Example 1 above, except that carbon black (containing an oxygen concentration of 1.3 at%) with a particle diameter (D50) of 40 nm was used instead of carbon black (containing an oxygen concentration of 5.2 at%), and MgF₂ with a particle diameter (D50) of 35 nm to 45 nm was used instead of AgF.

### Examples 2-1 to 2-6, and Comparative Examples 2-1 to 2-4: Preparation of negative electrodes

The negative electrodes (1.2 mAh/cm² ) of Examples 2-1 to 2-6 and Comparative Examples 2-1 to 2-4 were prepared by blade coating each negative electrode active material slurry prepared in Examples 1-1 to 1-6 and Comparative Examples 1-1 to 1-4 above on SUS foil to a thickness of 10 µm and drying.

### Preparation of all-solid-state lithium-ion secondary battery of Examples 3-1 to 3-6 and Comparative Examples 3-1 to 3-4

The pouch-type monocells of Examples 3-1 to 3-6 and Comparative Examples 3-1 to 3-4 were fabricated using a positive electrode loaded with 5 mAh/cm² of positive electrode active material in the current collector as a positive electrode, the negative electrode fabricated in Examples 2-1 to 2-6 and Comparative Examples 2-1 to 2-4 as a negative electrode, and a sulfide-based all-solid-state electrolyte (LPSCI composition) as an electrolyte.

### Experimental Example 1: Evaluating the characteristics of cell

The pouch-type monocells of Examples 3-1 to 3-6 and Comparative Examples 3-1 to 3-4 were operated within an operating voltage range of 4.25 V to 3.0 V and at an operating temperature of 60°C to evaluate their cycling characteristics, and the results are shown in Table 2 below.

**[Table 2]**

| Battery | Active material | Discharge capacity according to rate (%) (compared to 0.1C first discharge capacity) | | | |
|---|---|---|---|---|---|
| | | 0.1 C | 0.33 C | 0.5 C | 1.0 C |
| Example 3-1 | Carbon black - containing 5.2 at% oxygen | 100 | 97.5 | 96.0 | 91.7 |
| | AgF | | | | |
| Example 3-2 | Carbon black - containing 5.2 at% oxygen | 100 | 97.7 | 96.5 | 92.1 |
| | LiF | | | | |
| Example 3-3 | Carbon black - containing 5.2 at% oxygen | 100 | 94.9 | 93.2 | 88.2 |
| | ZnF₂ | | | | |
| Example 3-4 | Carbon black - containing 2.6 at% oxygen | 100 | 93 | 91.9 | 88.7 |
| | ZnF₂ | | | | |
| Example 3-5 | Carbon black - containing 1.3 at% oxygen | 100 | 90.5 | 89.3 | 84.1 |
| | ZnF₂ | | | | |
| Example 3-6 | Carbon black - containing 5.2 at% oxygen | 100 | 97.4 | 96.0 | 91.7 |
| | AgF (15 parts by weight of total weight of active material) | | | | |
| Comparative Example 3-1 | Carbon black - containing 5.2 at% oxygen | 100 | 95.73 | 92.21 | 82.75 |
| | Ag | | | | |
| Comparative Example 3-2 | Carbon black - containing 5.2 at% oxygen | 100 | 90.6 | 88.2 | 85.1 |
| | AgF (10 parts by weight of total weight of active material) | | | | |
| Comparative Example 3-3 | Carbon black - containing 5.2 at% oxygen | 100 | 91.3 | 87.5 | 86.4 |
| | MgF₂ | | | | |
| Comparative Example 3-4 | Carbon black - containing 1.3 at% oxygen | 100 | 88.6 | 85.6 | 83.1 |
| | MgF₂ | | | | |

## Claims

1. A negative electrode comprising a current collector and an active material layer, wherein the active material layer includes carbon material particles and at least one metal fluoride particles selected from the group consisting of AgF, LiF, ZnF₂, AlF₃, CaF₂, CoF₃, CuF₂, NiF₂, and CoF₂.

2. The negative electrode according to claim 1,
wherein the metal fluoride particles are comprised in an amount of 15 to 50 parts by weight, based on a combined weight of 100 parts by weight of the carbon material particles and the metal fluoride particles.

3. The negative electrode according to claim 1,
wherein a ratio of the carbon material particle diameter (D50) to the metal fluoride particle diameter (D50) is 1 : 0.03 to 1.5.

4. The negative electrode according to claim 1,
wherein the carbon material particles are amorphous carbon material particles.

5. The negative electrode according to claim 1,
wherein the active material layer comprises 60 to 80% by weight of the carbon material particles, 15 to 30% by weight of the metal fluoride particles, and 3 to 20% by weight of binder.

6. The negative electrode according to claim 1,
wherein the carbon material particles comprise 3 to 10 at% oxygen.

7. The negative electrode according to claim 6,
wherein the oxygen is present in the form of being incorporated into an oxygen-containing functional group that binds to the carbon material particles.

8. The negative electrode according to claim 7,
wherein the functional group comprises at least one selected from the group consisting of a carboxy group, a hydroxy group, an ether group, an ester group, an aldehyde group, a carbonyl group, and an amide group.

9. A lithium-ion secondary battery comprising the negative electrode according to claim 1; a positive electrode; and an electrolyte disposed between the negative electrode and the positive electrode.

10. The lithium-ion secondary battery according to claim 9,
wherein the electrolyte comprises a sulfide-based solid electrolyte.

11. The lithium-ion secondary battery according to claim 10,
wherein the lithium-ion secondary battery is an anodeless battery.
